# EUROPEAN PATENT APPLICATION

(11) **EP 4 159 799 A1**
(43) Date of publication of application: **05.04.2023**
(21) Application number: 21200236.4
(22) Date of filing: 30.09.2021
(51) Int. Cl.: C08K 5/00, C08K 5/08, C08K 5/55, C08L 67/06, C08G 59/68

(54) **PHOTO INITIATOR COMPOSITIONS**

(71) Applicant: Rapollo Resins ApS, 7100 Vejle (DK)
(72) Inventor: Talpada, Vinod, 7100 Vejle (DK); Liebman, Axel, 7100 Vejle (DK)
(74) Representative: Budde Schou A/S

(57) **Abstract**

The invention relates to a photo initiator composition for curing photo curable resins comprising at least two photo initiators, camphorquinone as photosensitizer, and an epoxy-based resin. At least one of the photo initiators is a cationic photo initiator, and the composition is curable with UV light having wavelengths in the range 360 nm to 520 nm.

## Description

The present invention relates to photo initiator compositions for curing photo curable resins.

### BACKGROUND ART

Resin-compositions, which are polymerizable and/or crosslinkable by electromagnetic radiation, such as electromagnetic radiation comprising UV, visible and IR light, are suitable for use in many applications. In the resin-compositions the electromagnetic radiation affects photo initiator systems in the resins.

Photo initiator systems are widely used in industrial applications and serve to facilitate the curing of curable resins, such as epoxy resins, by means of light, such as UV light or IR light.

Polymerized resins are used in several industrial applications, e.g., fiber reinforced products like wings for windmills and hulls for boats, but also fiber reinforced linings for pipe rehabilitations, tanks and sewers is a well known technology. Also known are such durable coatings for metal, constructions or buildings.

Several photo initiator systems have been developed, and different photo initiator systems may cure resins at different wavelengths or resins with a specific composition.

However, there has been a long-felt need in the field of (photo) curing of curable resin-compositions to find improved and reliable photo initiator systems for curing resins and methods for providing cured structural parts, i.e., parts and resin objects having a thickness of at least 0.5 to 8 mm and having appropriate mechanical properties such as tensile strength and modulus, hardness, adhesion and chemical resistance as well as low shrinkage.

Safety considerations also play a major role when curing a polymerizable or crosslinkable resin mixed with (co)polymerizable free monomer, i.e., in a reactive or non-reactive diluent. Reactive or non-reactive diluents are generally relatively volatile compounds that may be dangerous because of explosion risks at incidentally occurring high temperatures, and because of toxicity aspects during preparation of the cured materials. The process of curing is also time consuming.

Moreover, the photo initiator systems used today have a rather short period in which they can be stored. This is due to the fact that the ingredients in the photo initiator compositions have very short storage stability. Thus, the photo initiator compositions have to be mixed with the photo curable resins and used within few weeks.

### DISCLOSURE OF THE INVENTION

An object of the present invention is to provide photo initiator compositions for curing photo curable resins which provide an efficient curing and have good storing properties, good mechanical properties, easy handling, and are an economical alternative to traditional resin systems.

The photo initiated resins according to the invention apply for the same general purpose as described for traditional resins. The photo initiated resin composition described for the two systems is used for reinforcing materials such as nano-particles, glass fibers, polyolefin fibers, carbon fibers, steel and Kevlar fibers. The resin composition is also used with basalt, fillers, and extenders to achieve the desired properties. Also the resin composition is used for coatings and protection of surfaces.

The invention aims at improving photo initiator compositions in respect of the storage stability, easy handling with improved properties. The invention is characterised by having two, three or more independent photo initiators with a storage life more than 2 years for sealed packages under normal conditions. The compositions are mainly used with unsaturated polyester resin, vinyl ester resin, epoxy acrylates, polyester acrylates, photo cured acrylates resins, and most styrene, methyl styrene containing resins. The resin systems containing the invented composition are exposed to UV-LED or UV light, which cured within few seconds.

The invention provides a compositions with two or more photo initiators containing resin compositions which can be used with unsaturated polyester resin, vinyl ester resin, epoxy acrylates, polyester acrylates, photo cured acrylates resins, and most styrene, methyl styrene containing resins with 1 % to 10 %, typically 4 % to 8 %. After mixing, the resin composition is exposed to UV LED light at 360 nm to 520 nm wavelength, typically 380 nm to 480 nm wavelength, at 0.001 W/cm2 to 10 W/cm2 intensity for curing. The composition can be used with reinforcing material such as glass fibers, polyolyfine fibers, flax, linen, carbon fiber, basalt or similar reinforcing materials in a thickness of 0.2 to 8 mm, typically 2 to 5 mm. The invention can also be used to reinforcement of CIPP (cured-in-place pipe), load carrying construction as well as coatings.

The compositions according to the invention have proven to cure fast, even in thick reinforced materials from 2-8 mm, and are an economical alternative to conventional cured systems having similar mechanical properties.

The present invention relates to a photo initiator composition for curing photo curable resins comprising at least two photo initiators, camphorquinone as photosensitizer, and an epoxy-based resin, wherein at least one of the photo initiators is a cationic photo initiator, and wherein the composition is curable with UV light having wavelengths in the range 360 nm to 520 nm.

In an embodiment, the present invention provides a photo initiator composition for curing photo curable resins comprising at least two photo initiators selected from diphenyl (2,4,6-trimethylbenzoyl) phosphine oxide and phenyl bis (2,4,6-trimethylbenzoyl) phosphine oxide, and at least one photosensitizer selected from camphorquinone, and wherein diphenyl (2,4,6-trimethylbenzoyl) phosphine oxide phenyl bis (2,4,6-trimethylbenzoyl) phosphine oxide and phenyl bis (2,4,6-trimethylbenzoyl) phosphine oxide each constitutes at least 10 % of the composition, and camphorquinone constitutes at least 1 % of the composition.

It has been realised that the unique compositions with the selected photo initiators combined with camphorquinone provide excellent curing of resins and, moreover, have good properties in respect of curing.

In an embodiment, the photo initiator compositions comprise the ingredients:

| | |
|---|---|
| Bisphenol A/F resin | 10 - 45 % |
| diphenyl (2,4,6-trimethylbenzoyl) phosphine oxide | 10 - 30 % |
| phenyl bis (2,4,6-trimethylbenzoyl) phosphine oxide | 10 - 30 % |
| camphorquinone | 1 - 30 % |

The compositions including Bisphenol A/F resin serve to improve the properties of the compositions.

All percentages are weight-% (percent % (w/w).

The photo initiator composition according to the invention can be used in amounts of about 1 % to about 10 %, such as about 4 % to about 8%, for curing of unsaturated polyester resin, vinyl ester resin, epoxy acrylates, polyester acrylates, photo cured acrylates resins, and also styrene and methyl styrene containing resins. When the photo initiator composition is mixed with a resin, the mixture can be cured with a short reaction time. Furthermore, the photo initiator composition has excellent properties in respect of storage and can be stored for a long time.

The compositions provide a resin product (cured resin) with good mechanical properties, e.g., in respect of strength.

The photo initiator composition may be applied on reinforcing material such as glass fibers, polyolyfine fibers, flax, linen, carbon fiber, basalt or similar reinforcing materials. The compositions can be applied with a thickness of about 0.1 to 10 mm, such as about 2 to 5 mm. Thus, the compositions can be applied in rather thick layers and still be cured.

For the purpose of curing the photo initiator compositions, in an embodiment the compositions are exposed to UV LED light wavelengths ranging from about 360 nm to about 520 nm, such as from 380 nm to 480 nm, with an intensity from about 0.001 W/cm2 to 10 W/cm2. LED light is convenient and cost effective in use compared with traditional light sources.

During the curing process the compositions are exposed to UV LED light for up to 1 to 200 seconds, such as up to 10 to 60 seconds. Thus, it is possible to obtain a cured resin in less than three and a half minutes.

When the composition is exposed to an UV LED light source, the UV LED light source is in an embodiment moved over the surface of the resin filled fibre at the speed of about 5 m/hr to about 80 m/hr.

The invention provides a photo initiator and epoxy composition according to claim 1 comprising:

| | |
|---|---|
| Epoxy resins | 75 - 95 % |
| Benzopinacole | 0.5 - 5 % |
| A solution of Bis[4-(diphenylsulfonio)phenyl]sulfide bis(hexafluoroantimonate) andAntimonate(1-),hexafluoro, diphenyl[(phenylthio)phenyl]sulfonium in propylene carbonate | 1 - 7 % |
| Camphorquinone | 0.1 - 5 % |
| (4-(1-methylethyl)phenyl)-(4-thylphenyl)iodonium tetra-kis(pentafluorophenyl)borate(1-) | 0.001 - 5 % |

The cationic photointiator mix (sulfanediyldibenzene-4,1-diyl)bis(diphenylsulfonium) bis(hexafluoroantimonate) in propylene carbonate is available from Lambsom Group Ltd. under the name Speed cure 976.

The cationic photointiator (Tolycumyl) iodonium tetrakis (pentafluorophenyl) borate is available as Bluesil PI 2074 from Elkem Silicones.

The photo initiator and epoxy compositions are used as liquid epoxy resins, solid epoxy resins, semi liquid epoxy resins, cycloaliphatic epoxy resins, cycloaromatic epoxy resins as well as epoxy resins diluents for hybrid photo polymerisation.

The photo initiator and epoxy compositions have very good adhesion to various substrates and exhibit low shrinkage, typically below 2% volumetric, and are moreover curable in thick reinforced materials having a thickness from about 2 mm to about 8 mm.

In an embodiment, the photo curable epoxy based resin is filled in reinforcing materials such as glass fibers, polyolyfine fibers, flax, linen, carbon fiber, basalt or similar reinforcing materials in a thickness of about 0.1 mm to about 10 mm, typically from about 2 mm to about 5 mm, and exposed to the UV LED light source having a wavelength in the range 360 - 520 nm, preferably in the range 380 - 480 nm, at the intensity of 0.001 W/cm2 to 10 W/cm2 up to 1 to 200 seconds, typically from 10 to 60 seconds.

The photo curable epoxy based resin adds good properties to the reinforcing materials.

### DETAILED DESCRIPTION OF THE INVENTIONS

The invention will now be described in further details with reference to some examples.

### EXAMPLE 1

### 1. UV LED curing of unsaturated polyester resin with photo initiator composition according to the invention.

### 1.1. Light Cure

The photo initiators phenyl bis (2,4,6-trimethylbenzoyl) phosphine oxide (BAPO) and diphenyl (2,4,6-trimethylbenzoyl) phosphine oxide (TPO) have a absorption band in the long wave UV around 350 - 420 nm, and are combined with long wave absorber camphorquinone at 450-470 nm, which leads to a very good through cure in the unsaturated polyester resin or other resins containing styrene.

The photo initiators absorb the light to form an excited triplet state that goes on to have two active free radicals via alpha-cleavage of the CO-alkyl bond called phos-phinoyl and benzoyl radicals.

The free radicals are reacted with double bonds of vinyl monomer and polyester resin. Towards the end of the polymerisation process the low molecular weight vinyl monomer, especially styrene, copolymerizes with the ethylenic unsaturated crosslinked matrix.

### 1.2. Preparation.

### 1.2.1 Preparation of the Photo initiators composition.

The bisphenol A/F based epoxy is heated up to 50°C, and TPO is added while continuously stirring. When the TPO is dissolved completely, BAPO and camphorquinone are added. The mixture is stirred continuously at 50°C until the photo initiators have mixed/dissolved completely.

The % of the ingredients as below:

| | |
|---|---|
| Bisphenol A/F resin | 60 % |
| TPO | 12 % |
| BAPO | 24 % |
| Camphorquinone | 4% |

### 1.2.2 Preparation of the unsaturated polyester resin system.

The photoinitiator mixture is added to the unsaturated polyester resin while continuously stirring till the mixture becomes homogenous.

The % of the ingredients as below:

| | | |
|---|---|---|
| Unsaturated polyester resin | 96 % | |
| Photo initiator composition | 4% | |

### 1.3. Application of the resin composition.

### 1.3.1 Clear cast resin.

A mould was prepared with the above prepared composition mixture with unsaturated polyester resin. A source of UV LED light, which has a wavelength of 440 to 460 at the intensity from 0.1 to 10 W/cm2, was applied up to 1 to 200 seconds, typically 10 to 60 seconds. The reaction generates heat up to 100 to 200°C. The cured items were cooled down to room temperature and tested for the physical as well as mechanical properties.

Clear cast resin physical and mechanical properties:

| | | | |
|---|---|---|---|
| Tensile strength | 50-70 MPa | (ASTM D 638 - 2a) | |
| Tensile modulus | 30-4000 MPa | (ASTM D 638 - 2a) | |
| Flexural strength | 100-110 MPa | | (ASTM D 790) |
| Flexural modulus | 30-4000 MPA | | (ASTM D 790) |
| Shore D hardness | 85-90 | | (ASTM D 2240) |
| Glass transition temperature (Tg) | | 100 -120°C | (ASTM E1356-08) |

### 1.3.2 Glass fiber application.

The above prepared composition mixture with unsaturated polyester resin was also applied on 3 to 6 mm thick polyolefin-based fibre under dark conditions. The source of UV LED light, which has a wavelength of 440 to 460 at the intensity from 0.1 to 10 W/cm2, was ignited. The light moved over the surface of the resin-filled fibre at the speed of 10 to 80 m/hr. The fiber-reinforced structure was allowed to cool down to room temperature and the ultimate mechanical properties were measured.

| | | | |
|---|---|---|---|
| Pull-off Adhesion on cast iron | 5 - 7 MPa | | (ASTM D4541) |
| Pull-off Adhesion on Cured polyester resin surface | | 6 - 8 MPa | (ASTM D4541) |

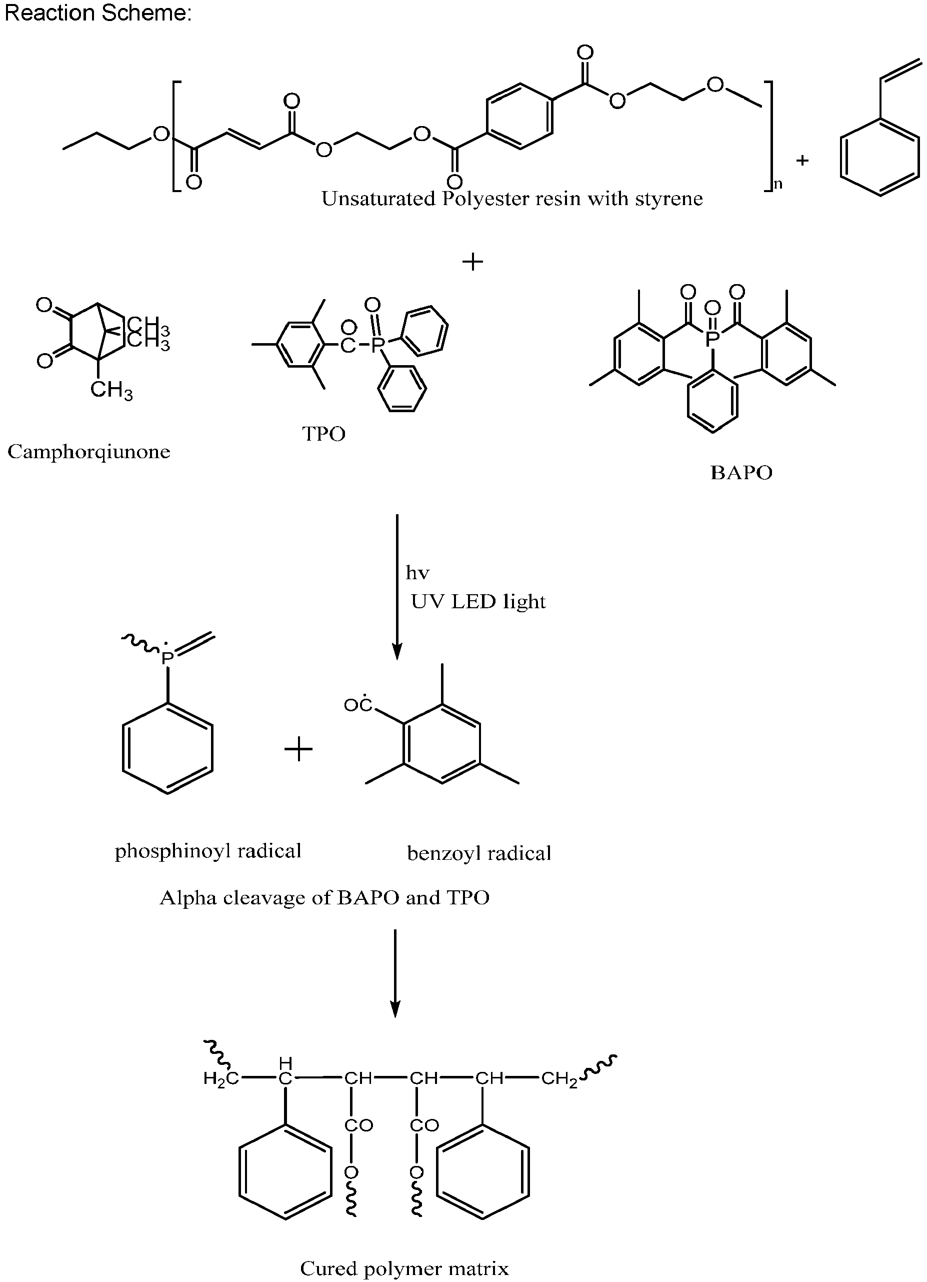

### 2. Photo initiator mixture used for hybridisation with vinyl monomers and epoxy resin.

The above-described photo initiator mixture was used for the hybridisation of vinyl monomers and epoxy resin with photo initiator bluesil PI 2074 (4-isopropyl-4'-me-thyldiphenyliodonium tetrakis(pentafluorophenyl)borate) along with onium salts, such as triphenyl sulfonium salts, diaryl iodonium salts, ferrocenium salts and various other metallocene compounds, and as photosensitizer camphorquinone. The epoxy resins are mainly solid epoxy resins, liquid epoxy resins, semi liquid epoxy resins and various type of epoxy resin diluents. The vinyl monomers are various types of acrylates, styrenes and Diallyl phthalates for improvement of the mechanical, physical as well as the thermal properties of the resin system.

The cationic photointiator composition Speed cure 976 ((sulfanediyldibenzene-4,1-diyl)bis(diphenylsulfonium) bis(hexafluoroantimonate) in propylene carbonate) available from Lambsom Group Ltd. was used. Absorption maxima of the composition appear at 230 and 295 nm.

Moreover, the cationic photointiator (Tolycumyl) iodonium tetrakis (pentafluorophenyl) borate was used. The cationic photointiator is available as Bluesil PI 2074 from Elkem Silicones.

The reaction is a hybrid reaction of the free radical polymerisation and cationic polymerisation, which contributes to good mechanical properties of the end polymer matrix.

The % of the ingredients are as below:

| | |
|---|---|
| Epoxy resins | 96 % |
| Benzopinacole | 1 % |
| Speedcure 976 | 2% |
| Camphorquinone | 0,5 % |
| Bluesil PI 2074 | 0,5% |

The mixture was applied on 1 to 6 mm thick fibre under dark conditions. The source of UV LED light having a wavelength of 440 to 460 at the intensity from 0.1 to 10 W/cm2 was ignited, and the fibres with the mixture were exposed to light for 7-15 seconds. The fiber-reinforced structure was allowed to cool down to room temperature, and the ultimate mechanical properties were measured.

Clear cast resin physical and mechanical properties:

| | | | |
|---|---|---|---|
| Tensile strength | 60-70 MPa | | (ASTM D 638 - 2a) |
| Tensile modulus | 30-4500 MPa | | (ASTM D 638 - 2a) |
| Flexural strength | 90-120 MPa | | (ASTM D 790) |
| Flexural modulus | 30-4500 MPA | | (ASTM D 790) |
| Shore D hardness | 90 - 95 | | (ASTM D 2240) |
| Glass transition temperature (Tg) | | 120 -140°C | (ASTM E1356-08) |

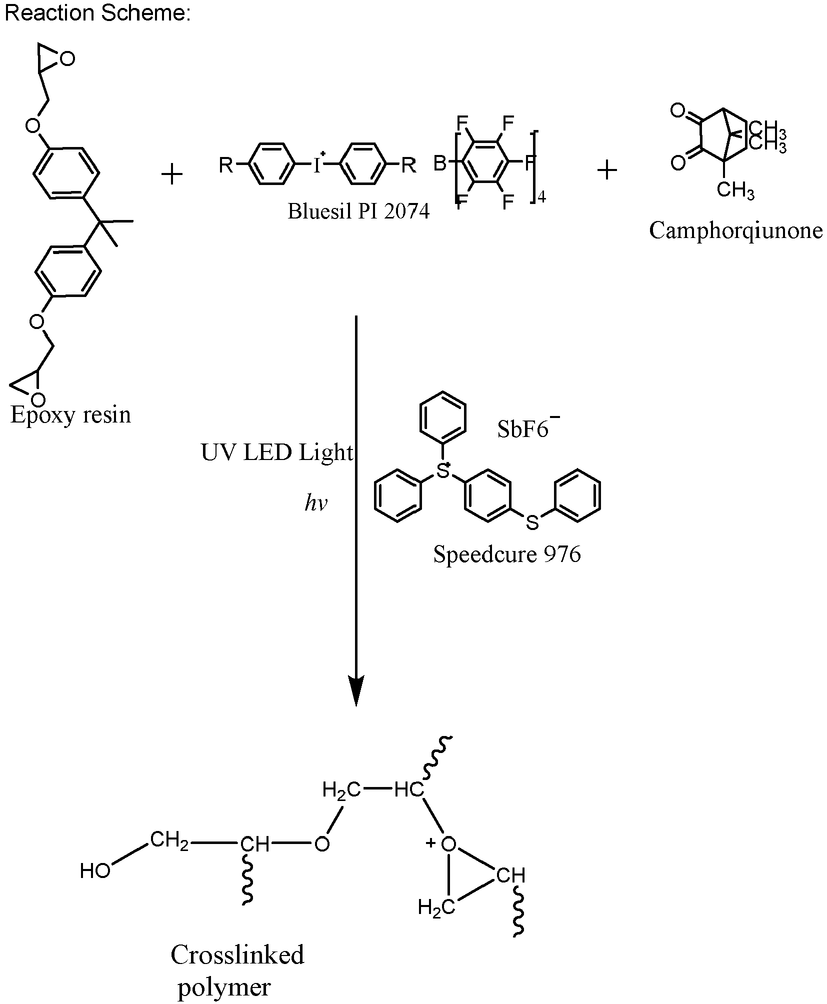

## Claims

1. A photo initiator composition for curing photo curable resins comprising at least two photo initiators, camphorquinone as photosensitizer, and an epoxy- based resin, wherein at least one of the photo initiators is a cationic photo initiator, and wherein the composition is curable with UV light having wavelengths in the range 360 nm to 520 nm.

2. A photo initiator composition according to claim 1 comprising:
at least two photo initiators selected from diphenyl (2,4,6-trimethylbenzoyl) phosphine oxide and phenyl bis (2,4,6-trimethylbenzoyl) phosphine oxide, and at least one photosensitizer selected from camphorquinone, and wherein
diphenyl (2,4,6-trimethylbenzoyl) phosphine oxide constitutes at least 10 % of the composition,
phenyl bis (2,4,6-trimethylbenzoyl) phosphine oxide constitutes at least 10 % of the composition, and
camphorquinone constitutes at least 1 % of the composition.

3. A photo initiator composition according to claim 1 or 2 comprising the ingredients:
| | |
|---|---|
| Bisphenol A/F resin | 20 - 60 % |
| diphenyl (2,4,6-trimethylbenzoyl) phosphine oxide | 10 - 30 % |
| phenyl bis (2,4,6-trimethylbenzoyl) phosphine oxide | 10 - 30 % |
| Camphorquinone | 1 - 20 % |

4. A photo initiator composition according to any one of the claims 1-3, wherein 1 % to 10 %, such as 4 % to 8 %, are used for curing of unsaturated polyester resin, vinyl ester resin, epoxy acrylates, polyester acrylates, photo cured acrylates resins, styrene and methyl styrene containing resins.

5. A photo initiator composition according to any one of the claims 1 - 4, applied on reinforcing material such as glass fibers, polyolyfine fibers, flax, linen, carbon fiber, basalt or similar reinforcing materials, wherein the composition is applied with a thickness of 0.1 to 10 mm, such as 2 to 5 mm.

6. A photo initiator composition according to any one of the claims 1 - 5, wherein the composition is exposed to UV LED light at 360 nm to 520 nm wavelength, such as 380 nm to 480 nm wavelength, at an intensity of 0.001 W/cm2 to 10 W/cm2.

7. A photo initiator composition to any one of the claims 1 - 6, wherein the composition is exposed to UV LED light for up to 1 to 200 seconds, such as up to 10 to 60 seconds.

8. A photo initiator composition according to any one of the claims 1 - 7, wherein the composition is exposed to the UV LED light source, which is moved over the surface of the resin-filled fibre at the speed of 5 to 80 m/hr.

9. A photo initiator and epoxy composition according to claim 1 comprising:
| | |
|---|---|
| Epoxy resins | 75 - 95 % |
| Benzopinacole | 0.5 - 5 % |
| A solution of Bis[4-(diphenylsulfonio)phenyl]sulfide bis(hexafluoroantimonate) andAntimonate(1-),hexafluoro, diphenyl[(phenylthio)phenyl]sulfonium in propylene carbonate | 1 - 7 % |
| Camphorquinone | 0.1 - 5 % |
| (4-(1-methylethyl)phenyl)-(4-thylphenyl)iodonium tetra-kis(pentafluorophenyl)borate(1-) | 0.001 - 5 % |

10. A photo initiator and epoxy composition according to claim 9, the epoxy resins used being such as liquid epoxy resins, solid epoxy resins, semi liquid epoxy resins, cycloaliphatic epoxy resins, cycloaromatic epoxy resins as well as epoxy resins diluents for hybrid photo polymerisation, wherein the resins have very good adhesion to various substrates, to exhibit low shrinkage, typically below 2% volumetric, and to be curable in thick, reinforced materials from 2-8 mm.

11. A photo curable epoxy based resin according to claim 9 or 10, wherein the epoxy resin is filled in the reinforcing materials, such as as glass fibers, polyolyfine fibers, flax, linen, carbon fiber, basalt or similar reinforcing materials, in a thickness of 0.1 to 10 mm, typically 2 to 5 mm, and exposed to the UV LED light source having a wavelength in the range 360 - 520 nm, preferably in the range 380 - 480 nm, at the intensity of 0.001 W/cm2 to 10 W/cm2 up to 1 to 200 seconds, typically 10 to 60 seconds.
